**Europäisches Patentamt**

(19) **European Patent Office**

**Office européen des brevets**

(11) Veröffentlichungsnummer: **0 000 914**
**B1**

(12) EUROPÄISCHE PATENTSCHRIFT

(21) Anmeldenummer: 78100663.0

(22) Anmeldetag: 14.08.78

(51) Int. Cl.³: **G 03 B 27/24**

(54) Trenn- und Umlenkvorrichtung eines Kopiergeräts, insbesondere einer Lichtpausmaschine.

(30) Priorität: 18.08.77 DE 2737155

(43) Veröffentlichungstag der Anmeldung:
07.03.79 Patentblatt 79/05

(45) Bekanntmachung des Hinweises auf die Patenterteilung:
09.01.80 Patentblatt 80/01

(84) Benannte Vertragsstaaten: **DE FR GB NL**

(56) Entgegenhaltungen:
**DE – B – 1 611 537**
**US – A – 2 766 044**

(73) Patentinhaber: **HOECHST AKTIENGESELLSCHAFT,**
**KALLE, Patentabteilung,**
**Postfach 3540,**
**D–6200 Wiesbaden 1 (DE)**

(72) Erfinder: **Schröter, Herbert, Dr.,**
**Adalbert-Stifter Strasse 29,**
**D–6204 Taunusstein 1 (DE)**

EP 0 000 914 B1

Trenn- und Umlenkvorrichtung eines Kopiergeräts, insbesondere einer Lichtpausmaschine

Die Erfindung betrifft eine Trenn- und Umlenkvorrichtung eines Kopiergeräts, insbesondere einer Lichtpausmaschine mit einer in dem gemeinsamen Transportweg des aus einem Original und einem Kopiermaterialblatt zusammengesetzten Pausguts angeordneten Rollenanordnung mit zwei Rollen, von denen eine mit gegenüber der anderen Rolle größerer Umfangsgeschwindigkeit angetrieben wird, um eines zweier übereinanderliegender Blätter des Pausguts gegenüber dem anderen Blatt verschoben auszutragen sowie mit mindestens einer ersten, in den Transportweg hineinreichenden drehbaren Separierscheibe, welche an ihrem Umfang wenigstens eine Aufnahme aufweist, in der die Unterkante des vorgeschobenen Blattes aus dem gemeinsamen Transportweg umgelenkt wird.

In Lichtpausmaschinen besteht das Problem, daß nach der Belichtung des Kopiermaterials, das während seines Transports um einen Kopierzylinder durch ein transparentes Original hindurch belichtet wurde, das Kopiermaterial von dem Original zu trennen und durch eine Entwicklungsvorrichtung zu führen ist. Um eine kompakte Bauweise der Lichtpausmaschine zu erreichen, sollte die Umlenkung möglichst scharf erfolgen.

Bei einem bekannten Kopierapparat mit einer Vorrichtung der eingangs genannten Gattung ist in Transportrichtung des Pausguts hinter dem Pauszylinder eine wannenförmige Abgabeplatte angeordnet, auf die in Transportrichtung eine Rollenanordnung mit beidseitig des Transportwegs angeordneten Rollen folgt. Eine der beiden Rollen der Rollenanordnung besitzt eine größere Umfangsgeschwindigkeit als die andere Rolle. Dadurch werden, wenn das aus dem Original und dem Kopiermaterial bestehende Pausgut in den Einflußbereich der Rollenanordnung gelangt, die zwischen dem Original und dem Kopiermaterial bestehenden Reibungskräfte überwunden, und die Vorderkante des Kopiermaterials wird vor der Vorderkante des Originals aus der Rollenanordnung ausgetragen. Zur Trennung des derart vorbereiteten Pausguts sind weiter in Transportrichtung Separierscheiben vorgesehen, die an ihrem Umfang jeweils zwei sich gegenüberliegende Aufnahmen und Anschläge aufweisen. Die um eine Welle drehbar gelagerten Separierscheiben stehen mit dieser Welle in Reibungseingriff. Durch je ein Reibglied, das in radiale Aussparungen der Separierscheibe eingeführt ist, wird zugleich dafür gesorgt, daß sich die Separierscheibe nicht in axialer Richtung der Welle verschieben kann. Die Separierscheibe wird durch eine zweiarmige Klinke in einer Lage gehalten, in der das erste Armende der Klinke an dem Vorsprung anliegt, und der andere Arm der Klinke eine zu der Rollenanordnung weisende Aufnahme zumindest teilweise überdeckt. Mit der Welle, auf die die Separierscheiben gelagert sind, sind außerdem Förderrollen fest verbunden, die mit anliegenden Förderrollen zusammenwirken. Wenn die aus der zuvor beschriebenen Rollenanordnung austretende Vorderkante des Kopiermaterials in die Auflage der Separierscheibe gelenkt wird, wird durch die Vorderkante der Arm der Klinke, welcher die Aufnahme abdeckt, weggedrückt, womit zugleich der zweite Arm der Klinke von dem Vorsprung der Separierscheibe gelöst wird. Die Separierscheibe dreht sich dann mit der Welle, auf der sie gelagert ist, gemeinsam mit der Vorderkante des Kopiermaterials in der Aufnahme, bis vor der nächsten Arretierstellung die Vorderkante wieder aus der Aufnahme gelöst wird und der zweite Arm der Klinke an den nächsten Vorsprung der Separierscheibe anstößt. Durch die Bewegung der Separierscheibe wird somit das Kopiermaterialblatt aus der Bewegungsbahn des Originals entfernt, das von der Separierscheibe nicht erfaßt wird und infolgedessen nicht umgelenkt wird, sondern annähernd geradlinig zu der Kopiermaterialausgabe transportiert wird (DE-B-1611537).

Bei dieser bekannten Vorrichtung ist nachteilig, daß bei dem Kopieren von unbeschnittenen Vorlagen die Blätter des Pausguts durch die Rollenanordnung um einen großen Abschnitt gegeneinander verschoben werden müssen, da die Vorlage größer als das zugehörige geschnittene Kopiermaterialformat ist. So ist beispielsweise das geschnittene DIN A3 Format längs und quer je 32 mm kleiner als das dazugehörende unbeschnittene Format. Diese Unterschiede können bei größeren Formaten noch größer sein. – Um gleichwohl die Vorderkante des Kopiermaterials zur Trennung von dem Original mit der Rollenanordnung der bekannten Trenn- und Umlenkvorrichtung vorzuschieben, wird ein verhältnismäßig langer Transportweg benötigt, da das Pausgut während der gegenseitigen Verschiebung seiner Blätter insgesamt durch die Rollenanordnung weiter transportiert wird. Dementsprechend muß die wannenförmige Abgabeplatte vor der Rollenanordnung, in der das Pausgut frei gleiten kann, lang sein, mit der unerwünschten Folge, daß das Pausgut unter Umständen nicht die vorgesehene Richtung beibehält, und die Funktionsfähigkeit der Trenn- und Umlenkvorrichtung in Frage gestellt ist.

Der vorliegenden Erfindung liegt daher die Aufgabe zugrunde, unter Vermeidung der Nachteile der bekannten Vorrichtung eine Trenn- und Umlenkvorrichtung der eingangs genannten Gattung zu schaffen, die eine scharfe Umlenkung des Kopiermaterialblattes zu einer Entwicklungsvorrichtung hin auch dann ermöglicht, wenn das Kopiermaterialblatt von einer unbeschnittenen Vorlage getrennt werden soll. Dabei soll insbesondere der durch die wannenförmige Abgabeplatte gebildete Schlaufenraum des Kopiermaterials verhältnismäßig kurz gehalten werden, so daß ein störungsfreier Transport des Pausguts durch das Kopiergerät gewährleistet ist.

Diese Aufgabe wird für eine Trenn- und Umlenkvorrichtung der eingangs genannten Gattung dadurch gelöst, daß die beiden angetriebenen Rollen der Rollenanordnung derart an der Bewegungsbahn angeordnet sind, daß das Original gegenüber dem Kopiermaterialblatt vorgeschoben wird und daß in Transportrichtung des Kopiermaterialblatts hinter der ersten Separierscheibe wenigstens eine zweite Separierscheibe angeordnet ist, welche den Weg des Kopiermaterialblatts zu der Entwicklungskammer umlenkt.

Bei der erfindungsgemäßen Trenn- und Umlenkvorrichtung wird also im Unterschied zu dem voranstehend beschriebenen Stand der Technik nicht die Vorderkante des Kopiermaterialblatts vorgeschoben aus der Rollenanordnung ausgetragen, sondern die Vorderkante des Originals. Da ein unbeschnittenes Original entweder ohnehin vor dem Kopiermaterialblatt vorsteht oder allenfalls bündig mit diesem um den Kopierzylinder transportiert wird, ist mit der Rollenanordnung nur eine verhältnismäßig geringe Verschiebebewegung durchzuführen, um den Abstand der einzelnen Blätter des Pausguts zu erreichen, der erforderlich ist, um den folgenden Trenn- und Umlenkvorgang durchzuführen. Während dieser relativ geringen gegenseitigen Verschiebung der Blätter des Pausguts braucht dieses insgesamt nur um einen verhältnismäßig kurzen Weg durch den Schlaufenraum transportiert zu werden, der somit relativ einfach betriebssicher ausgebildet sein kann. Da die Vorderkante des Originals gegenüber derjenigen des Kopiermaterialblatts vorgeschoben ist, wird zur weiteren Beeinflussung der Blätter eine im übrigen besonders ausgestaltete Trenn- und Umlenkvorrichtung vorgesehen, in der mit einer ersten Separierscheibe zunächst das Original von dem Kopiermaterialblatt getrennt wird und das Original aus der Richtung, in der es normalerweise ohne Separierscheibe transportiert würde, umgelenkt wird. Das Kopiermaterialblatt, das nicht ohne weiteres und nicht durch beliebige Umlenkelemente auf kleinstem Raum der Entwicklungsvorrichtung zugeführt werden kann, wird durch eine zweite, der ersten Separierscheibe nachgeschaltete Separierscheibe erfaßt und in die gewünschte Bahn zu der Entwicklungsvorrichtung geleitet. Die zweite Separierscheibe hat also keine Trennfunktion, sondern es wird hier in besonders vorteilhafter Weise die Umlenkfunktion einer solchen Separierscheibe ausgenutzt. – Insgesamt ist mit dieser Trenn- und Umlenkvorrichtung eine betriebssichere Trennung des Kopiermaterials von dem Original und eine sichere Zuführung des Kopiermaterialblattes zu der Entwicklungsvorrichtung ermöglicht, und zwar auch dann, wenn unbeschnittene Originale gepaust werden. Die Trenn- und Umlenkvorrichtung zeichnet sich also durch besondere Betriebssicherheit aus. Sie kann dabei vergleichsweise kompakt ausgebildet sein. – Anstelle der ersten Separierscheibe kann auch ein Satz solcher in einer axialen Richtung angeordneter Separierscheiben vorgesehen werden. Das gleiche gilt für die zweite Separierscheibe. Der Aufwand für die Trenn- und Umlenkvorrichtung ist gleichwohl im Hinblick auf die erreichte Betriebssicherheit und Kompaktheit des Geräts zu rechtfertigen. Dabei müssen nicht unbedingt die beschriebenen Separierscheiben, mit denen sich besondere Vorteile bei ihrer normalen Funktion erzielen lassen, verwendet werden, sondern es genügen unter Umständen einfache Separierscheiben, die als versetzt hinterfräste Scheiben ausgebildet sind, auf einer Achse drehbar gelagert sind und durch eine schwache Feder in ihrer Ausgangsstellung gehalten werden.

Eine spezielle Ausbildung der Trenn- und Umlenkvorrichtung zeichnet sich durch eine solche Anordnung der ersten Separierscheibe aus, daß das Original nach unten zu einer Ausgabe umgelenkt wird und durch eine derartige Anordnung der zweiten Separierscheibe, daß das Kopiermaterialblatt nach oben zu der Entwicklungskammer umgelenkt wird. – Damit wird das Original in raumsparender Weise nach unten zu einer Originalausgabe abgeleitet, während das Kopiermaterialblatt zu der in üblicher Weise oberhalb des Pauszylinders angeordneten Entwicklungsvorrichtung gelenkt wird.

Eine weitere vorteilhafte Ausbildung der Trenn- und Umlenkvorrichtung hat die Merkmale, daß jede erste und zweite Separierscheibe mit einer der Anzahl der Aufnahmen gleichen Zahl von Vorsprüngen versehen ist, daß die Separierscheibe auf einer drehbaren Welle drehbar gelagert ist und mit ihr über eine Reibungsverbindung verbunden ist und gegen eine axiale Verschiebung gesichert ist, daß eine zweiarmige Klinke mit einem ersten Armende an den Vorsprung der Separierscheibe anlegbar ist, daß dabei einer der Aufnahmen in dem Transportweg zu den Rollen gerichtet ist und daß die Klinke mit einem zweiten Armende die Aufnahme zumindest teilweise überdeckt. Durch die Verwendung dieser Separierscheiben wird die Zuverlässigkeit des Trenn- und Umlenkvorgangs weiter gefördert, der auch dann ordnungsgemäß durchgeführt wird, wenn beide Blätter des Pausguts von der vorgeschriebenen Richtung beträchtlich abweichen.

Die Erfindung wird im folgenden anhand einer Zeichnung mit vier Figuren erläutert, in denen ein bevorzugtes Ausführungsbeispiel dargestellt ist. Es zeigt:

Fig. 1  einen schematischen Querschnitt durch die Lichtpausmaschine mit der Trenn- und Umlenkvorrichtung,

Fig. 2  und

Fig. 3  je eine Seitenansicht der Trenn- und Umlenkvorrichtung in verschiedenen Arbeitsstellungen und

Fig. 4  eine Draufsicht auf einen Teil der Trenn- und Umlenkvorrichtung.

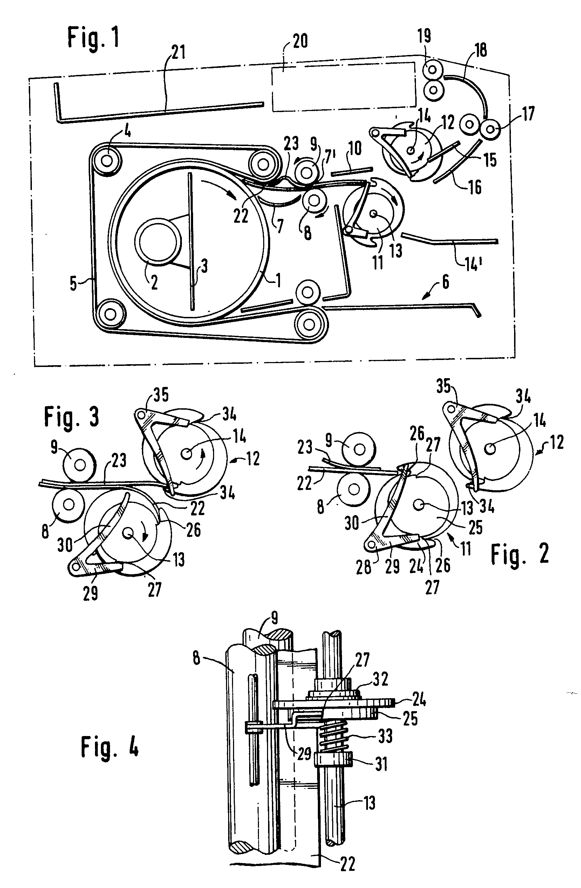

In Fig. 1 ist mit 1 ein Kopierzylinder bezeichnet, der eine Lampe 2 mit einem Reflektor 3 einschließt. Um einen großen Umschlingungswinkel des Kopierzylinders läuft ein durch die Rollen 4 umgelenktes Gurtband 5. Mit dem Gurtband wird das auf einer Auflage 6 eingeschobene Pausgut durch die Belichtungszone der Lampe 2 transportiert und zu der Trenn- und Umlenkvorrichtung ausgegeben.

Die Trenn- und Umlenkvorrichtung besteht im wesentlichen aus einer wannenförmigen Platte 7, einer in Transportrichtung hinter dieser wannenförmigen Platte angeordneten Rollenanordnung mit den angetriebenen Rollen 8 und 9 beiderseits des Transportwegs, einer Umlenk- und Trennvorrichtung mit einer ersten Anordnung von Separierscheiben, die unterhalb des gemeinsamen Transportwegs des Pausguts angeordnet ist, sowie in Transportrichtung des Kopiermaterialblattes einer zweiten Anordnung von Separierscheiben 12, die oberhalb des Transportwegs des Kopiermaterialblattes angeordnet ist. Die Separierscheiben jeder Anordnung sind dabei auf einer Welle 13 bzw. 14 beabstandet.

Seitlich unter der ersten Anordnung von Separierscheiben befindet sich eine Ablage 14' für die Originale. Seitlich neben der zweiten Anordnung von Separierscheiben 12 befindet sich ein Ableitglied 15 sowie ein Förderglied 16, um das Kopiermaterialblatt über Führungsrollen 17, ein Führungsblech 18 und weitere Führungsrollen 19 durch eine Entwicklungsvorrichtung 20 zu einer Kopiermaterialablage 21 zu transportieren. – Entsprechend Fig. 1 kann zwischen der Rollenanordnung 8, 9 und der ersten Anordnung von Separierscheiben noch ein Führungsglied 10 angeordnet sein, welches das Pausgut der ersten Anordnung von Separierscheiben zuführt. Die Rollenanordnung 8, 9 wird so angetrieben, daß sich die Rolle 9, die auf der Seite des Kopiermaterialblattes der Transportbahn liegt, entgegen dem Uhrzeigersinn mit gleicher Umfangsgeschwindigkeit dreht wie das Gurtband. Die Rolle 8 der Rollenanordnung wird hingegen über eine Rutschkupplung mit höherer Umfangsgeschwindigkeit als diejenige der Rolle 9 und als die Geschwindigkeit des Gurtbandes betrieben. Somit wird das Pausgut, das mit dem Gurtband von dem Kopierzylinder wegtransportiert wird, durch die Rollenanordnung 8, 9 mit gleicher Geschwindigkeit weiter transportiert, solange das Pausgut zwischen dem Gurtband und dem Pauszylinder gehalten wird. Tritt jedoch die Hinterkante des Originals aus dem Anlagebereich des Gurtbandes an dem Pauszylinder gehalten wird. Tritt jedoch die Hinterkante des Originals aus dem Anlagebereich des Gurtbandes an dem Pauszylinder hervor, so wird das Original durch die Rolle 8 gegenüber dem Kopiermaterial, das mit der Rolle 9 transportiert wird, in Transportrichtung vorgeschoben, so daß es zur Trennung von dem Kopiermaterialblatt vorbereitet ist.

Die Anordnung von Separierscheiben 11, zu der das aus einem Original 22 und einem Kopiermaterialblatt 23 bestehende Pausgut transportiert wird, besteht aus einer Anzahl von Separierscheiben, die zueinander beabstandet um eine Welle 13 drehbar gelagert sind. Dabei entsteht zwischen den Scheiben und der Welle ein Reibschluß. Jede Separierscheibe ist aus zwei Scheiben 24 und 25 zusammengeschraubt, wie am besten aus den Figuren 2 bis 4 erkennbar ist. Die Scheibe 24 weist zur Aufnahme des Originals vorgesehene Aufnahmen 26 auf, und aus der Scheibe 25 sind Anschläge 27 ausgeformt. – Jedem Scheibenpaar 24, 25 ist eine zweiarmige Klinke 28 mit einem ersten Armende 29 und einem zweiten Armende 30 zugeordnet. Wenn sich die zweiarmige Klinke 28 in ihrer in Fig. 2 dargestellten Ruhelage befindet, stößt das erste Armende 29 an einen der beiden Anschläge 27 an und hält die Scheiben 24 und 25 in dieser Stellung fest. Dabei deckt das zweite Armende 30 eine der beiden Aufnahmen 26 für das Original zumindest teilweise ab.

Wird hingegen das zweite Armende 30 durch die voreilende Vorderkante des Originals niedergedrückt, so schwenkt das erste Armende 29 von dem Anschlag 27 weg, so daß sich das Scheibenpaar 24, 25 zusammen mit dem Original im Uhrzeigersinn drehen kann. Dabei läuft das Scheibenpaar 24, 25 zusammen mit der Welle 13 um, die mit einer solchen Drehzahl angetrieben wird, daß sie den Umfang der Scheibe 24 im Bereich der Aufnahme mit gleicher Umfangsgeschwindigkeit dreht, wie sich das Gurtband bewegt. Die Kupplung zwischen dem Scheibenpaar 24 und 25 einerseits und der Welle 13 andererseits wird im einzelnen dadurch bewirkt, daß, wie aus Fig. 4 hervorgeht, das Scheibenpaar 24, 25 zwischen zwei auf der Welle 13 befestigten Bunden 31, 32 unter dem Krafteinfluß einer Druckfeder 33 steht. Wenn das erste Armende 29 der zweiarmigen Klinke an dem Anschlag 27 anliegt, wie in der von unten betrachteten Anordnung nach Fig. 4 gezeigt, so wird das Scheibenpaar 24, 25 durch die angetriebene Welle 13 nicht mitgenommen, sondern rutscht gegenüber der Welle durch. Erst wenn das erste Armende 29 von dem Anschlag 27 abrückt, dreht sich das Scheibenpaar 24, 25 zusammen mit der Welle 13. In diesem Fall wird das Original 22 mit der Aufnahme 26 des Originals nach unten aus der gemeinsamen Transportbahn 26 des Originals nach unten aus der gemeinsamen Transportbahn des Pausguts umgelenkt und auf die Ausgabe 14' geschoben. Bei dieser in Fig. 3 dargestellten Betriebsphase gelangt das Kopiermaterialblatt 23 zu der zweiten Anordnung von Separierscheiben 12.

Diese zweite Anordnung von Separierscheiben 12 ist im einzelnen in gleicher Weise wie die Anordnung von Separierscheiben 11 aufgebaut. Die Welle 14, mit der die Separierscheiben der Anordnung 12 in Reibverbindung stehen, ist hier jedoch entgegen dem Uhrzeigersinn angetrieben, und zwar wieder mit einer Geschwindigkeit, daß die Umfangsgeschwindigkeit im Bereich der Aufnahme 34 für die Kopiermaterialblätter gleich ist der Geschwindigkeit, mit der das Kopiermaterialblatt 23 vor seiner Berührung mit der zweiarmigen Klinke 35 transportiert wird. Die zweiarmige Klinke sorgt dafür, daß sich eine Aufnahme 34 für das Kopiermaterialblatt stets in einer Stellung befindet, die zur Erfassung der Vorderkante des Kopiermaterialblattes geeignet ist, so daß das Kopiermaterialblatt durch die zweite Anordnung 12 von Separierscheiben zwischen das Ableitglied 15 und das Förderglied 16 mitgenommen wird und von dort durch die Entwicklungsvorrichtung geleitet wird. Durch die zweite Anordnung 12 von Separierscheiben wird also keine Trennung bewirkt, wohl aber eine verhältnismäßig scharfe Umlenkung des bereits von dem Original abgetrennten Kopiermaterialblatts, das nach der Entwicklung in der Entwicklungsvorrichtung 20 auf die Kopiermaterialablage 21 ausgestoßen wird.

## Patentansprüche

1. Trenn- und Umlenkvorrichtung eines Kopiergerätes, insbesondere einer Lichtpausmaschine, mit einer in dem gemeinsamen Transportweg (7') des aus einem Original (22) und einem Kopiermaterialblatt (23) zusammengesetzten Pausguts angeordneten Rollenanordnung mit zwei Rollen (8, 9), von denen eine mit gegenüber der anderen Rolle größerer Umfangsgeschwindigkeit angetrieben wird, um eines der beiden übereinanderliegenden Blätter des Pausguts gegenüber dem anderen Blatt vorgeschoben auszutragen, sowie mit mindestens einer ersten, in den Transportweg (7') hineinreichenden, drehbaren Separierscheibe (Anordnung 11), die an ihrem Umfang wenigstens eine Aufnahme (26) aufweist, in der die Vorderkante des vorgeschobenen Blattes aus dem gemeinsamen Transportweg (7') umgelenkt wird, dadurch gekennzeichnet, daß die beiden angetriebenen Rollen (8, 9) der Rollenanordnung derart an dem Transportweg (7') angeordnet sind, daß das Original (22) gegenüber dem Kopiermaterialblatt (23) vorgeschoben wird, und daß in Transportrichtung des Kopiermaterialblatts hinter der ersten Separierscheibe (Anordnung 11) wenigstens eine zweite Separierscheibe (Anordnung 12) angeordnet ist, welche den Weg des Kopiermaterialblatts zu der Entwicklungskammer (20) umlenkt.

2. Trenn- und Umlenkvorrichtung nach Anspruch 1, gekennzeichnet durch eine solche Anordnung der ersten Separierscheibe (Anordnung 11) unterhalb des Transportwegs (7'), daß das Original (22) nach unten zu einer Ausgabe (14') umgelenkt wird, und durch eine derartige Anordnung der zweiten Separierscheibe (Anordnung 12), daß das Kopiermaterialblatt (23) nach oben zu der Entwicklungskammer (20) umgelenkt wird.

3. Trenn- und Umlenkvorrichtung nach Anspruch 1 oder 2, dadurch gekennzeichnet, daß jede erste und zweite Separierscheibe (Anordnung 11 und 12) mit einer der Anzahl der Aufnahmen (26 bzw. 34) gleichen Zahl von Vorsprüngen (Anschläge 27) versehen ist, daß die Separierscheibe auf einer drehbaren Welle (13 bzw. 14) drehbar gelagert ist und mit ihr über eine Reibungsverbindung (31, 32, 33) verbunden ist und gegen eine axiale Verschiebung gesichert ist, daß eine zweiarmige Klinke (28 bzw. 35) mit einem ersten Armende (29) an dem Vorsprung (Anschlag 27) der Separierscheibe anlenkbar ist, daß dabei eine der Aufnahmen (26) in dem Transportweg zu den Rollen (8, 9) gerichtet ist und daß die Klinke (28 bzw. 35) mit einem zweiten Armende (30) die Aufnahme (26 bzw. 34) zumindest teilweise überdeckt.

**Claims**

1. A separating and deflecting mechanism in a copier, particularly in a photocopying machine, comprising an arrangement of two rolls disposed in the common transport path of the material to be processed which includes an original and a sheet of copying material, with one of the two rolls being driven at a higher cercumferential speed than the other in order to deliver one of the two superimposed sheets of the material to be processed in advance of the other sheet, further comprising at least one first rotatable separating disk extending into the transport path and having at least one recess on its circumference, in which the leading edge of the advanced sheet is diverted from the common transport path, characterized in that the two driven rolls (8, 9) of the arrangement of rolls are disposed at the transport path (7') in such a manner that the original (22) is advanced with respect to the sheet of copying material (23) and in that at least one second separating disk (arrangement 12) is disposed behind the first separating disk (arrangement 11) in the direction of transport of the sheet of copying material, which second separating disk diverts the path of the sheet of copying material towards the developing chamber (20).

2. A separating and deflecting mechanism according to claim 1, characterized in that the first separating disk (arrangement 11) is disposed below the transport path (7') in such a manner that the original (22) is diverted downwardly towards a delivery table (14') and in that the second separating disk (arrangement 12) is disposed in such a manner that the sheet of copying material (23) is diverted upwardly towards the developing chamber (20).

3. A separating and deflecting mechanism according to claim 1 or claim 2, characterized in that each first and each second separating disk (arrangements 11 and 12) is provided with a number or recesses (26 respectively 34) and an equal number of projections (stops 27), in that the separating disk is rotatably mounted on a rotatable shaft (13 respectively 14), and is connected via a friction connection (31, 23, 33) with the shaft and is secured against axial displacement, in that a two-armed locking lever (28 respectively 35) may, by the end of a first arm (29), be brought into contact with a projection (stop 27) of the separating disk while one of the recesses (26) faces the rolls (8, 9) in the transport path, and in that the locking lever (28 respectively 35) at least partly covers the recess (26 respectively 34) with the end of the second arm (30).

**Revendications**

1. Dispositif séparateur/déviateur d'un appareil reprographique, notamment d'une machine héliographique, dont le parcours commun (7') du document original (22) et de la feuille de copie (23), constituant le matériel reprographique, passe d'une part par un groupe de deux cylindres (8, 9) dont l'un est entraîné à une vitesse circonférentielle supérieure à celle de l'autre, afin de récupérer ainsi l'une des deux feuilles superposées du matériel reprographique avant l'autre et, d'autre part, par un premier disque séparateur rotatif au moins (groupe 11) qui est placé sur le parcours commun (7') et qui comporte, sur son pourtour, un dispositif récepteur (26) au moins, qui dévie du parcours commun (7') l'arête avant de la feuille passée en tête, caractérisé en ce que les deux cylindres entraînés (8, 9) du groupe sont aménagés sur le parcours (7') de manière que le document original (22) est avancé par rapport à la feuille de copie (23) et en ce que, vu dans le sens du déplacement, un deuxième disque séparateur (groupe 12) au moins est implanté en aval du premier (groupe 11) et assure la déviation de la feuille de copie en direction de la chambre de développement (20).

2. Dispositif séparateur/déviateur selon la revendication 1, caractérisé en ce que le premier disque séparateur (groupe 11) est installé en dessous de la voie de passage (7'), de manière que le document original (22) se trouve dévié vers le bas en direction d'une plage de réception (14'), alors que le deuxième disque séparateur (groupe 12) est placé dans le circuit de manière telle que la feuille de copie (23) se trouve déviée vers le haut, en direction de la chambre de développement (20).

3. Dispositif séparateur/déviateur selon l'une quelconque des revendication 1 ou 2, caractérisé en ce que sur chaque premier et sur chaque deuxième disque séparateur (groupes 11 et 12), le nombre de dispositifs récepteurs (26, 34) est égal au nombre de butées (27) et en ce que le disque séparateur rotatif est monté sur un axe (13, 14), lui-même rotatif, et relié à celui-ci par l'intermédiaire d'un embrayage à friction (31, 32, 33), tout en s'y trouvant bloqué contre tout mouvement de glissement dans le sens axial et en ce qu'un cliquet (28, 35) à deux branches (29, 30) s'appuie, avec l'extrémité de la première branche (29), contre la partie en saillie (butée 27) du disque séparateur, à l'effet de quoi l'un des dispositifs récepteurs (26) du parcours est dirigé vers les cylindres (8, 9) alors qu'avec l'extrémité de sa deuxième branche (30), le cliquet (28, 35) recouvre, au moins partiellement, ce dispositif récepteur (26, 34).

Fig. 1

Fig. 3

Fig. 2

Fig. 4